# EUROPEAN PATENT APPLICATION

(11) **EP 3 144 241 A1**
(43) Date of publication of application: **22.03.2017**
(21) Application number: 15886269.8
(22) Date of filing: 22.03.2015
(51) Int. Cl.: B65D 39/08, B65D 39/04, B67B 1/06, G01N 35/02, G01N 35/04

(54) **SAMPLE STORING OBJECT AND AUTOMATED SAMPLE STORING OBJECT SYSTEM**

(71) Applicant: Kobe Bio Robotix Co. Ltd., Katou-shi, Hyogo 673-1336 (JP)
(72) Inventor: KAKUDA Shinichiro, Kobe-shi Hyogo 657-0001 (JP)
(74) Representative: Horn Kleimann Waitzhofer Patentanwälte PartG mbB
(86) International application number: PCT/JP2015/058636
(87) International publication number: WO 2016/151714

(57) **Abstract**

[Problem to be solved] A sample storage tube and an automation system for operating a sample storage tube are provided, which can operate a lid capping operation, a carrying operation and lid decapping operation by using a robot arm.

[Solution] A sample storage tube 100 comprises a tube body 120 and a lid 110. The lid 110 comprises a lid dent inner screw 112 accessible by a first lid access module 210 and a lid top recession and protrusion shape structure 113 accessible by a second lid access module. A capping operation and a carrying operation for the lid 110 against the tube body 120 is achieved by the rotation torque to the lid 110 given by the second lid access module via the lid top recession and protrusion shape structure 113. The pulling-up force by the rotation of the first lid access module via the lid dent inner screw 112 and the pushing-down force by the contacting of the second lid access module via the lid top recession and protrusion shape structure 113 at the same time, the lid is held firmly by pinching the both forces.

## Description

### Technical Field

This invention relates to a sample storage tube for storing and containing many samples. For example, the sample storage tube is used in enclosing and storing samples of developing medicine. Also, it is used for storing samples that hold gene information of DNA in the medical field. As such a sample storage tube becomes small, it is called a micro tube.

This invention relates to an automation system for capping a lid to a sample storage tube, decapping the lid from the sample storage tube, carrying the sample storage tube by grabbing and moving it from the predetermined place to the other predetermined place by its robot arm.

### Background Art

In the research and development of medicine and chemicals, sample storage tubes are used extensively in storing a large number of samples. For example, scientists prepare a large number of samples for a comparative experiment with slightly changing conditions such as blending amount, and they use storage tubes for storing the samples for a required period of time while evaluating them.

In order to control and store a large number of storage tubes at one time as described above, there are two types of the sample storage systems known in the prior art. The first type is a well-plate block type of the sample storage container. The second type is a micro tube array type arraying a lot of sample storage containers of the micro tube type in the storage rack.

The micro tube array stores and contains each test sample in each small sample container called the micro tube piece by piece independently and arrayed in the storage rack. The micro tube is a container of about several centimeter height and made of plastic material. Each micro tube is an independent piece, and it is possible to use them as sample storage containers one by one. It is also possible to use the micro tube array storing a lot of test samples at the same time by arraying a lot of micro tubes in the storage rack.

The micro tube comprises a tube body, which has an opening at the top, for storing the sample; and a lid for enclosing the opening of the tube body.

There are several way for enclosing the opening of the tube body with the lid.

One is a screw type. For example, what is called the "outer screw type" is provided as the combination of a male screw installed in the outer surface of the top portion of the tube body and a female screw installed in the inner surface of the lid, and these are combined by engaging them. For example, what is called the "inner screw type" is provided as the combination of a female screw installed in the outer surface of the top portion of the tube body and a male screw installed in the inner surface of the lid, and these are combined by engaging them.

When using the micro tube array, each micro tube is an independent sample storage container, so each micro tube should be identified independently. In recent years sample storages that are controlled by printing a barcode or two-dimensional code on the side and/or bottom surface of the storage tube are highlighted, in which various data and/or control information of a sample are encoded.

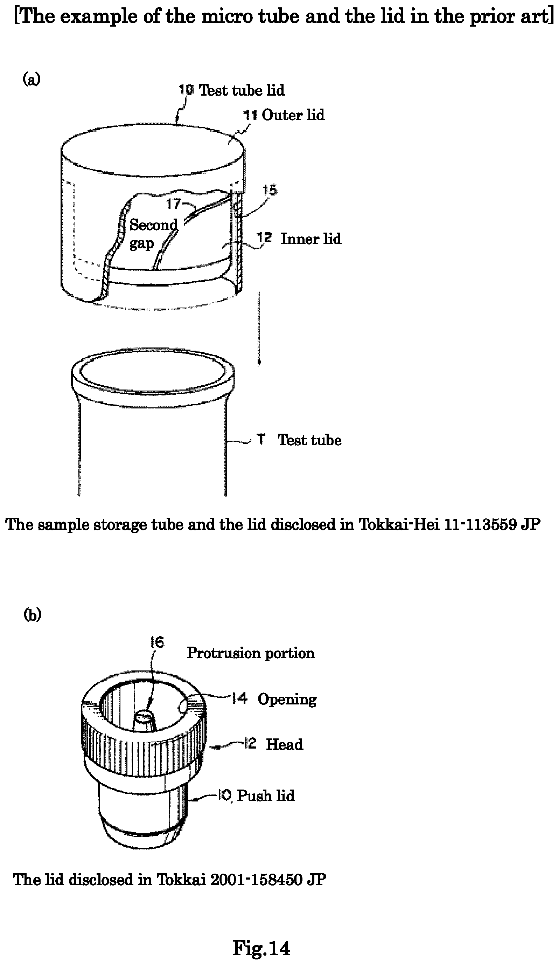

Fig.14 is a figure showing the micro tube in the prior art. In order to understand the configuration easily, the inner structure of the micro tube is shown by broken lines. After putting a sample into the micro tube, the opening of the micro tube body is enclosed by the lid. As shown above, there are the outer screw type and the inner screw type by the screw structure of the opening of the micro tube body and the lid.

Recently, the operation of the micro tube is automated by using the robot arm. For example, capping the lid to the micro tube body and decapping the lid from the micro tube body are automated. The carrying control of the micro tube from the predetermined position of the rack to another predetermined position of the other rack is automated.
Prior art 1: Tokkai 2001-158450 JP
Prior art 2: Tokkai-Hei 11-113559 JP

### Disclosure of the invention

### The problems to be solved

As shown in the background of the invention, the automation system for operating the micro tube by the robot arm is developing. However, it is difficult to carry the micro tube from the predetermined position of the rack to another predetermined position of the other rack.

The first problem is that it is difficult to grab the micro tube precisely. Generally, technology in the prior art for grabbing the tube structure such as a micro tube with the robot arm utilizes several pins working as fingers. These pins push the micro tube from all squares at the same time and hold the micro tube in the air. It can be regarded as fingers when grabbing the object with four fingers. This robot arm system can be used but the mechanism of the robot arm becomes complicated and a clearance space is required around the micro tube for allowing room for the pin's horizontal motion. Micro tubes are arrayed tightly in the rack, so there is not enough space for such clearance. In addition, when carrying the micro tube with such pins, the accidents of dropping the micro tube into the automation machine may occur during carrying. If the micro tube falls into the automation machine, the small micro tube may lodge in the inner mechanism or the transmission belt, and it takes a lot of time to pick the micro tube from the automation machine.

Other technology in the prior art for holding the micro tube on the tip of the robot arm with a vacuum apparatus for providing negative pressure can be applied. The vacuum apparatus installed on the robot arm can be used but it is difficult to installing the vacuum apparatus on a small robot arm. In addition, when carrying the micro tube with such vacuum apparatus, the accidents of dropping the micro tube into the automation machine may occur during carrying, as with the pins. If the micro tube falls into the automation machine, the small micro tube may lodge in the inner mechanism or the transmission belt, and it takes a lot of time to pick the micro tube from the automation machine.

Other technology in the prior art for screwing the robot arm into the female screw in the lid and carrying the micro tube can be applied. However, this is not a stable state and the accidents of dropping the micro tube into the automation machine may occur during carrying.

The second problem is that the process steps and process time will be increased by the re-composing of the robot arm parts.

The automated processes of the micro tube are mainly an operation for capping the lid to the micro tube body, an operation for decapping the lid from the micro tube body and an operation for carrying the micro tube. The required mechanism of the tip of the robot arm in the operation for capping and in the operation for decapping are related to the screw element and the rotation motion. The required mechanism of the tip of the robot arm in the operation for carrying the micro tube is different from the screw element base mechanism whether it utilizes the pins element or the vacuum apparatus element. The robot element in the art cannot be used commonly, so the tip mechanism of the robot arm should be re-composed during the operations. The process flow of the capping operation followed by the carrying operation sequentially can be assumed. The re-compose processing of the tip of the robot arm should be required during such sequential operation. Such time loss becomes a big problem.

The third problem is that it is difficult to control the position and angle of the micro tube in the carrying operation.

When carrying the micro tube, the micro tube is grabbed by the tip of the robot arm and moved in the air. It is important for the robot arm to control the position and angle of the micro tube precisely, because the position and angle control relate to the accuracy of inserting into the rack at the predetermined position of the rack. In the carrying operation, the micro tube grabbed by the tip of the robot arm is carried in the air and is inserted to the predetermined position of the rack. However, if there is a skew in the micro tube position and angle in the air, the horizontal position of the upper portion and the bottom portion of the micro tube will be deviated from the precise position. The positioning accuracy of the micro tube will be deteriorated, and accidental failure of the insertion into the rack can occur. Furthermore, the accidental dropping into the automation machine by collision of the micro tube body and the edge of the rack separation can occur. Therefore, it is important for the robot arm to control the position and angle of the micro tube precisely.

The fourth problem is the clearance for the robot arm to access and operate on the micro tube.

As shown above, the clearance required by the tip of the robot arm becomes larger than the size of the lid because the micro tube is pinched from the all squares whether the mechanism of the tip of the robot arm for grabbing the micro tube is the pin type or the vacuum apparatus type. Therefore, the rack size becomes large according to the increase of the clearance among the micro tube position in the rack. If the clearance required by the robot arm operation equals or is less than the size of the lid, the extra clearance among the micro tube position in the rack is not required for the robot arm operation. The micro tube can be arrayed intentionally in the rack.

It is an object of the present invention to provide a micro tube that can be operated for capping and decapping the lid by the robot arm easily, and which can be operated for carrying in a stable state by using the same tip element of the robot arm; and to provide an automation system for working on the micro tube that has a small clearance less than the lid size for the robot arm operation.

### Means for solving the problems

In order to achieve the above-mentioned object, the present invention of a sample storage tube comprises a tube body for storing sample; a lid for enclosing the opening of the tube body by screwing to the tube body; a lid structure in the top surface of the lid comprises a lid dent inner screw installed in a dent at the center of the lid top surface, wherein the lid dent inner screw can be accessed by a first lid access module which accesses as an external member; and a lid top recession and protrusion shape structure installed on the top edge of the lid, wherein the lid top recession and protrusion shape structure can be accessed by a second lid access module which accesses as an external member.

It is preferable that the lid top recession and protrusion shape structure define a gear shape structure on the top edge of the lid. If the gear shape structure installed to the second lid access module corresponds to the gear shape structure as the lid top recession and protrusion shape structure, these can fit each other.

The example of the lid top recession and protrusion shape structure is a single or a plurality of small dents or holes. If the projections or pins installed to the second lid access module correspond to the plurality of small dents or holes, these can fit each other.

It is preferable that the sample storage tube can be operated by the second lid access module for a screwing control and an opening control of the lid to the tube body by the rotation torque to the lid via the lid top recession and protrusion shape structure. In addition, the sample storage tube can be operated by the first lid access module for closing control of the lid to the tube body by the rotation torque applied to the lid is operated by the first lid access module via the lid dent inner screw. Furthermore, the sample storage tube can be operated by the combination of the first lid access module and the second lid access module for carrying control of the sample storage tube by applying both a pull-up force applied by the first lid access module via the lid dent inner screw and a pull-down force applied by the second lid access module contacting to the lid top recession and protrusion shape structure at the same time to pinch the sample storage tube in a stable state.

According to the above-mentioned configuration, the lid capping operation can be easily controlled by the rotation torque applied to the lid by the combination operation of the first lid access module and the second lid access module. The lid decapping operation can be easily controlled by the rotation torque applied to the lid by the second lid access module. The carrying operation can be precisely controlled by the combination operation of the first lid access module and the second lid access module to pinch the sample storage tube in stable state. These operations can be controlled by the same tip of the robot arm.

The sample storage tube of the present invention can employ an inner screw type structure. The tube body comprises an inner screw installed to the inner side wall surface near the opening and the lid comprises an outer screw installed to the outer side wall surface corresponding to the inner screw of the tube body. The lid can screw into the tube body, and the opening of the tube body can be closed.

The sample storage tube of the present invention can employ an outer screw type structure. The tube body comprises an outer screw installed to the outer side wall surface near the opening and the lid comprises an inner screw installed to the inner side wall surface corresponding to the outer screw of the tube body. The lid can screw into the tube body, and the opening of the tube body can be closed.

In order to identify each sample storage tube, it is preferable that an information writable medium is present at either or both of the side outer surface or the bottom surface of the tube body. The identification code information can be printed on the bottom surface of the tube body in addition to the side outer surface. The readability will be enhanced.

It is preferable that the tube body comprises a rotation preventing object installed to the side wall surface or the bottom surface the tube body contacting to the structure of the rack. The rotation preventing object prevents the tube body from rotating regardless of applying the rotation torque to the tube body. Therefore, the lid capping operation and the lid decapping operation can be conducted by rotating the lid without idle rotation.

Next, the sample storage tube operating automation system for operating a sample storage tube, which sample storage tube comprises a tube body for storing a sample and a lid for enclosing an opening of the tube body by screwing to the tube body, comprises; a robot arm comprising a first lid access module and a second lid access module for accessing the lid and operating the sample storage tube; wherein the lid comprises a lid dent inner screw installed in a dent at the center of the lid top surface, the lid dent inner screw can be accessed by the first lid access module; and a lid top recession and protrusion shape structure installed on the top edge of the lid, the lid top recession and protrusion shape structure can be accessed by the second lid access module, wherein the second lid access module can achieve a screwing control and an opening control of the lid to the tube body by the rotation torque applied to the lid via the lid top recession and protrusion shape structure; wherein the first lid access module can achieve an enclosing control of the lid to the tube body by the rotation torque applied to the lid via the lid dent inner screw; wherein the combination of the first lid access module and the second lid access module can achieve a carrying control of the sample storage tube in a pinched stable state by applying both a pull-up force applied by the first lid access module via the lid dent inner screw and a pull-down force applied by the second lid access module contacting to the lid top recession and protrusion shape structure at the same time.

For example, in the robot arm configuration, the first lid access module accessing to the lid dent inner screw is located in the center, and the second lid access module accessing to the lid top recession and protrusion shape structure is located in an outer portion around the first lid access module, wherein the first lid access module is a male screw bolt structure, and the second lid access module is a cylinder shape structure around the first lid access module.

For another example, in the robot arm configuration, the first lid access module accessing to the lid dent inner screw is located in the center and the second lid access module accessing to the lid top recession and protrusion shape structure is located in an outer portion around the first lid access module, and the first lid access module and the second lid access module can rotate independently each other and can slide up and down independently. In this configuration, the first lid access module is a male screw bolt structure, and the second lid access module is a cylinder shape structure around the first lid access module, wherein the recession and protrusion shape structure corresponding to the lid top recession and protrusion shape structure is installed on the top edge of the cylinder shape structure.

The operation of the sample storage tube operating automation system and the motion of the sample storage tube are described as follows. Regarding the lid capping operation, it is operated as follows.

First, a lid is carried to the requested right position above the corresponding tube body. The lid is carried being pinched by the cooperation of the first lid access module and the second lid access module. Next, the lid is carried toward the opening of the tube body and contacts it. The lid is rotated by the access module (either the first lid access module or the second access module), the rotation torque is applied to the lid, and the lid is rotated and screwed into the tube body. It is preferable to select the first lid access module as the applying module for rotating the lid. The merit of using the first lid access module is as follows. First, the lid posture in rotation applying the first lid access module becomes more stable than that of the second lid access module, because the total contacting area becomes larger as the first lid access module is screwed into the lid dent inner screw. In addition, the lid rotation axis corresponds to the center axis of the first lid access module easily, and the lid posture can be controlled precisely. Second, the stress applied to the tube body when the lid is screwed into it becomes small. In addition, it is easier to detect the completion of the lid screwing into the tube body. If the second lid access module is used, the second lid access module rotates with the lid top recession and protrusion shape structure installed on the top edge of the lid connected directly. Therefore, the tube body receives impact of the rotation torque directly from the second lid access module when the lid screwing into the tube body is completed and they cannot rotate anymore. If the first lid access module is used, the first lid access module rotates in the lid dent inner screw and the rotation torque is applied to the tube body via the lid dent inner screw, the first lid access module keeps on screwing into the lower margin screw of the lid dent inner screw even though the lid rotation itself stops. Therefore, there is no impact of the rotation torque at the end of lid screwing operation. In addition, the expected lid screwing finishing position can be detected easily by the stroke of the descending length of the first lid access module.

The carrying operation is operated as follows.

The tube body is enclosed firmly by the lid. Both the first lid access module and the second lid access module are contacted to the tube body. The second lid access module stops and contacts to the lid top recession and protrusion shape structure installed on the top edge of the lid. The first lid access module rotates to keep on screwing the lid into the lid dent inner screw. Then, the first lid access module pulls-up the lid via the lid dent inner screw. However, the second lid access module pushes-down the lid via the lid top recession and protrusion shape structure installed on the top edge of the lid by the contacting face. Therefore, the lid is pinched firmly by the tip of the robot arm by the pulls-up force and the pushes-down force and the lid is carried in the air in a stable good posture. The lid and the tube body screwed together can be carried by the robot arm in a stable good posture.

The lid decapping operation is operates as follows.

After carrying the sample storage tube in the predetermined position of the rack, the second lid access module rotates the lid for unscrewing direction against the tube body, while the first lid access module is in a stationary state. The tube body does not rotate, as blocked by the rotation preventing object, so only the lid rotates in the unscrewing direction by applying the rotation torque via the lid top recession and protrusion shape structure installed on the top edge of the lid. The lid is decapped from the tube body. The lid is held by the first lid access module via the lid dent inner screw even though the lid is decapped from the tube body. Therefore, the robot arm can carry the lid via the first lid access module separated from the tube body.

As shown above, the lid capping operation, the carrying operation and the lid decapping operation are operated by the same tip of the robot arm.

### Effect of the invention

According to the sample storage tube and the automation system for operating a sample storage tube of the present invention, the lid capping operation, the carrying operation and the lid decapping operation are operated by the same tip of the robot arm. Especially, the sample storage tube can be carried in a good posture by pinching the lid firmly by pulling-up force and pushing-down force.

### Brief description of the drawings

Fig.1 is a schematic view of the structure of the sample storage tube 100 (inner screw type).
Fig.2 is a schematic view showing the lid access module 200 of the automation system for operating a sample storage tube.
Fig. 3 is a schematic view showing the other structure of the lid top recession and protrusion shape structure installed on the top edge of the lid.
Fig. 4 is a schematic view showing the lid capping operation step (1)
Fig. 5 is a schematic view showing the lid capping operation step (2)
Fig. 6 is a schematic view showing the lid capping operation step (3)
Fig. 7 is a schematic view showing the carrying operation step (1)
Fig. 8 is a schematic view showing the carrying operation step (2)
Fig. 9 is a schematic view showing the lid decapping operation step (1)
Fig. 10 is a schematic view showing the lid decapping operation step (2)
Fig. 11 is a schematic view showing the lid decapping operation step (2)
Fig. 12 is a schematic view of the structure of the sample storage tube 100 (outer screw type).
Fig. 13 is a schematic view of the example which carries the identification code on the side wall surface and bottom surface.
Fig. 14 is a schematic view of micro tube array in the prior art and its problem.

### Detailed description of the preferred embodiment

Some embodiments of a sample storage tube and an automation system operating the sample storage tube according to the present invention are described below in reference to the relevant drawing. Needless to add, the claims of the present invention include but are not limited to the application, configuration, or quantity shown in the following embodiments.

### Embodiment 1

The sample storage tube 100 and an automation system operating the sample storage tube in embodiment 1 according to the present invention is described.

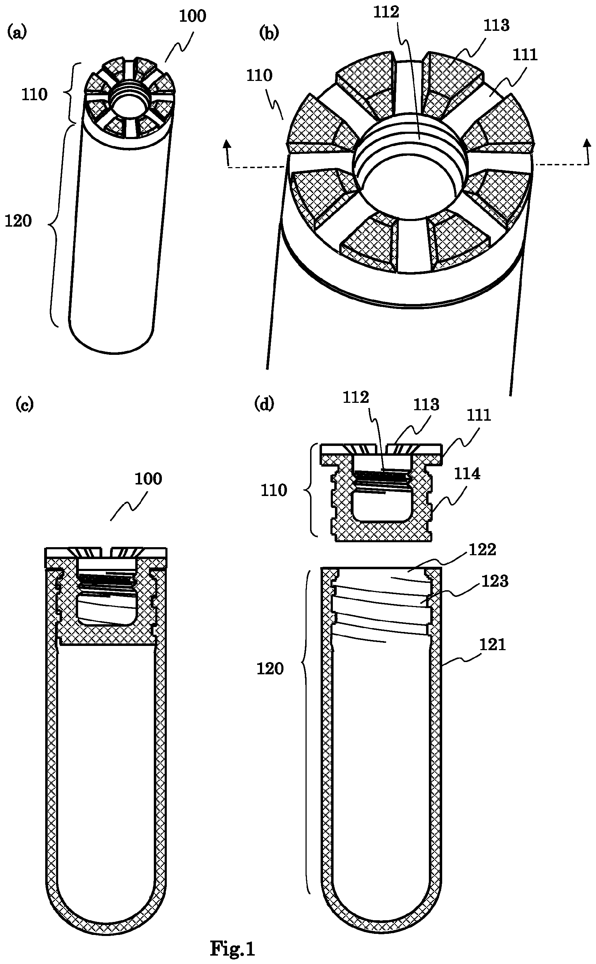

Fig.1 is a schematic view of the structure of the sample storage tube 100. This is an inner screw type tube.

Fig.1 (a) is a perspective view showing the sample storage tube 100 of the inner screw type capped with the lid 110.

Fig.1 (b) is an enlarged perspective view showing the lid 110.

Fig.1 (c) is a vertical cross-sectional view (A-A line cross-sectional view) showing the sample storage tube 100 capped with lid 110.

Fig.1 (d) is a vertical cross-sectional view (A-A line cross-sectional view) showing the sample storage tube 100 decapped the lid 110.

The sample storage tube 100 comprises a lid 110 and a tube body 120.

Hereinafter, the lid 110 and the tube body 120 are described.

As shown by Fig.1, the lid 110 is an enclosing device for closing the opening of the tube body 120. In this example, the lid 110 and the tube 120 are combined by screwing.

The lid 110 is made of material having chemical resistance such as plastic resin.

The lid 110 comprises a lid body 111, a lid dent inner screw 112, a lid top recession and protrusion shape structure 113 and a male screw 114.

The lid body 111 has a cylindrical shape in this example, and its shape corresponds to the upper opening 122 shape of the tube body 120 to cap it. The outer diameter of the lid body 111 is approximately equal to the outer diameter of the tube body.

The lid dent inner screw 112 is an inner screw provided to the inner side surface of a dent located in the center of the upper surface of the lid body 111. As shown later, it is installed by being accessed by the descending first lid access module from the upper direction. The first lid access module has a corresponding outer screw. The inner diameter of the lid dent inner screw 112 corresponds to the outer diameter of the first lid access module 210 they are engaged by screwing it. Therefore, the first lid access module 210 of the lid access module 200 is inserted to the lid dent inner screw 112, and the first lid access module 210 and the lid dent inner screw 112 are screwed and connected by rotation of the first lid access module 210.

In this example, the shape of the lid dent inner screw 112 is a cylindrical shape having the inner screw, it can be another shape corresponding to the shape of the tip of the robot arm.

The lid top recession and protrusion shape structure 113 is the shape installed to the upper edge of the lid body 111. In this example, the lid dent inner screw 112 is installed in the center of the upper surface of the lid body 111, and the recession and protrusion shapes are arrayed in a circle around the upper edge of the lid body 111. As shown later, the lid top recession and protrusion shape structure 113 is installed as being accessible by the descending second lid access module 220 from the upper direction.

The lid top recession and protrusion shape structure 113 has a recession and protrusion shape corresponding to the recession and protrusion shape installed to the tip of the second lid access module 220. Therefore, the recession and protrusion shape installed to the tip of the second lid access module 220 can fit and connect to the recession and protrusion shape of the lid top recession and protrusion shape structure 113. If the second lid access module 220 rotates, the rotation torque is transmitted via the lid top recession and protrusion shape structure 113, the lid 110 rotates according to the rotation torque.

The example shape of the lid top recession and protrusion shape structure 113 shown in Fig.1 is a gear shape installed to the top edge of the lid 110. The example shape of the recession and protrusion shape of the tip of the second lid access module 220 is corresponding gear shape. Therefore, the lid top recession and protrusion shape structure 113 accepts the accessing second lid access module 220, and these fit and are connected to each other.

Other recession and protrusion shapes can be employed as the lid top recession and protrusion shape structure 113 if it corresponds to that of the accessing second lid access module 220.

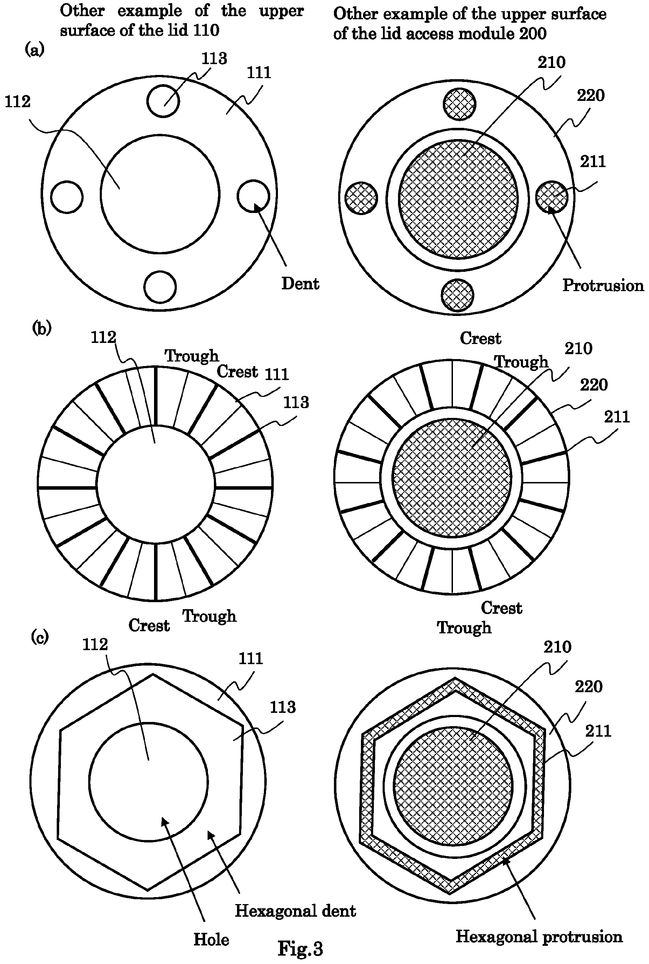

For example, a single or plurality of dents or holes installed to the upper surface of the lid 110 may be employed as shown in Fig.3(a). In this case, the shape of the tip of the robot arm has corresponding protrusions or pins, and the second lid access module 220 can be accepted by the lid 110. Other examples such as a notched shape shown in Fig.3 (b) and a polygonal dent shape shown in Fig.3(c) can be employed if it corresponds to that of the second lid access module 220.

The male screw 114 is provided at the lower portion of the lid 110, which corresponds to the tube body 120. The lid 110 is capped with tube body via this male screw 114 and the opening 122 of the tube body 120 can be closed by the lid 110.

As shown later, the outer diameter of the male screw 114 corresponds to the inner diameter of the tube body, the opening 122 of the tube body 120 is closed by screwing the male screw 114 of the lid 110 to the female screw of the tube body 120.

Next, the tube body 120 is described.

The tube body 120 is a container for storing the sample. In this example, the tube body comprises a body 121, opening 122 in the upper portion of body 121 and a female screw 123 provided at the inner side surface near the upper opening.

The tube body 120 has opening 122 at the upper portion, and it can store the sample and serve as a test tube.

In this example, the tube body 120 has a cylindrical test tube shape, but it can be modified to another shape depending on the use. For example, it comprises a rotation preventing object at the side wall surface or the bottom surface the tube body contacting to the structure of the rack to block the rotation. For example, a plurality of wing shape protrusions are installed at the bottom of the tube body in a radial pattern. If a plurality of wing shape protrusions are installed to the rack, the wing shape protrusions engage each other to prevent the tube body from rotating even though the rotation torque is applied to the tube body. If the rotation of the tube body 120 can be blocked, the tube body 120 does not rotate even though the rotation torque is transmitted via the lid 110 by the lid access module 200. The capping operation and the decapping operation can be operated precisely.

It is preferable that the material of the tube body 120 is transparent or translucent glass or plastic resin to allow observation of the preserved state of the enclosed sample. The plastic resin has chemical resistance. For example, it is selected from the group consisting of polypropylene, polyethylene, polyethylene terephthalate, polybutylene terephthalate, polycarbonate. The blend of a combination of several such plastic resins can be employed. It means that a polymer alloy of two kinds or more of plastic resins can be employed.

In this example, the material is polypropylene. Polypropylene is one of the preferable materials for the sample storage tube, which is chemical stable material and has high chemical resistance and high transparency.

The tube body 120 has what is called a test tube shape and comprises an upper opening, a cylindrical body and spindle shape bottom as shown in Fig.1 (c) and Fig.1 (d).

Regarding the height of the tube body 120, it is preferable that the tube body is higher than the grid plate of the rack. The sample storage tube 100 is inserted to and picked up from the rack repeatedly, if the upper portion of the tube body 120 is projecting from the rack top surface in the preserved state in rack, the sample storage tube body is easy to access with the robot arm.

The upper opening 122 is an opening of the tube body 120, which inner diameter corresponds to the outer diameter of the male screw 114 of the lid 110.

The female screw 123 is the screw provided at the upper inside wall of the tube body 120, which inner diameter corresponds to the outer diameter of the male screw 114 of the lid 110. Therefore, the opening of the 122 of the tube body can be closed by the lid 100 by screwing the male screw 114 into the female screw 123.

The configuration of the sample storage tube 100 is described as mentioned above.

Next, the lid access module 200 is described as follows.

The lid access module 200 is a tip of the robot arm for operating the sample storage tube 100. The lid access module 200 accesses to the lid 100 and operates it.

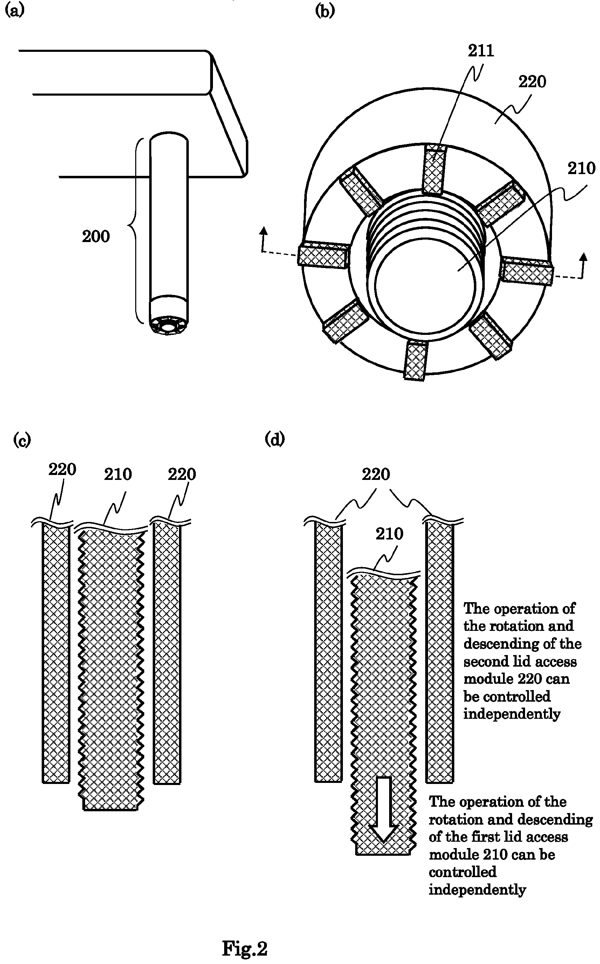

Fig.2 is a schematic view showing the lid access module 200 of the automation system for operating a sample storage tube.

Fig.2 (a) is a perspective view showing the lid access module 200 installed to the tip of the robot arm.

Fig.2 (b) is an enlarged perspective view showing the lid access module 200.

Fig.2 (c) is a vertical cross-sectional view (B-B line cross-sectional view) showing the lid access module 200.

Fig.2 (d) is a schematic view showing the operation in which the first lid access module 210 descends independently from the second lid access module 220.

In this example, the robot arm comprises the first lid access module 210 and the second lid access module 220 as shown in Fig.2. In this example, the first lid access module 210 for accessing the lid dent inner screw 112 is located in the center, and the second lid access module 220 for accessing the lid top recession and protrusion shape structure 113 is located around the first lid access module 210.

The first lid access module 210 corresponds to the lid dent inner screw 112 in the center of the lid 110. In this example, the first lid access module 210 is a bolt structure having male screw around it. The first lid access module 210 can be inserted to the lid dent inner screw 112 in the center of the lid 110 by rotating and screwing.

The second lid access module 220 corresponds to the lid top recession and protrusion shape structure 113. In this example, a recession and protrusion shape is provided in a circle around the edge of the cylinder corresponding to the lid top recession and protrusion shape structure 113. The edge of the of the second lid access module 220 contacts the lid top recession and protrusion shape structure 113 of the lid 110, and these are fit and connected to each other. By this connection, the rotation motion of the second lid access module 220 is transmitted to the lid 110 via the lid top recession and protrusion shape structure 113. The rotation torque is applied to the lid, and the capping operation and the decapping operation of the lid against the tube body can be carried out.

In this example, the first lid access module 210 is located in the center and the second led access module 220 is located around the first lid access module 210. The rotation operation and the slide operation for the first lid access module 210 and the second lid access module 220 can be controlled independently as shown in Fig.2 (c) and Fig.2 (d). As shown above, the first lid access module 210 and the second lid access module 220 are combined and installed to the tip of the robot arm together. The capping operation for the lid 110 to the tube body 120, the carrying operation for the sample storage tube 100 and the decapping operation for the lid 110 from the tube body 120 can be controlled by switching the control for the first lid access module 210 between the static state and rotation state, and switching the control for the second lid access module 220 between the static state and rotation state. These operations can be operated by one robot arm.

Hereinafter, the above-mentioned operations for the sample storage tube 100 by the lid access module 200 are described.

### [The lid capping operation]

The lid is carried to the requested position above the upper opening 122 of the sample storage tube body by the lid access module 200 of the robot arm. The lid position is set precisely.

During the carrying operation, the lid is pinched by the first lid access module 210 and the second lid access module 220 by the same mechanism of the sample storage tube carrying operation. The lid 110 does not fall from the lid access module 200, because the first lid access module 210 of the lid access module 200 is inserted and screwed into the lid dent inner screw 112 of the lid 100, and the edge of the second lid access module 220 contacts and connected to the lid top recession and protrusion shape structure 113, the lid 110 is pinched by these lid access modules.

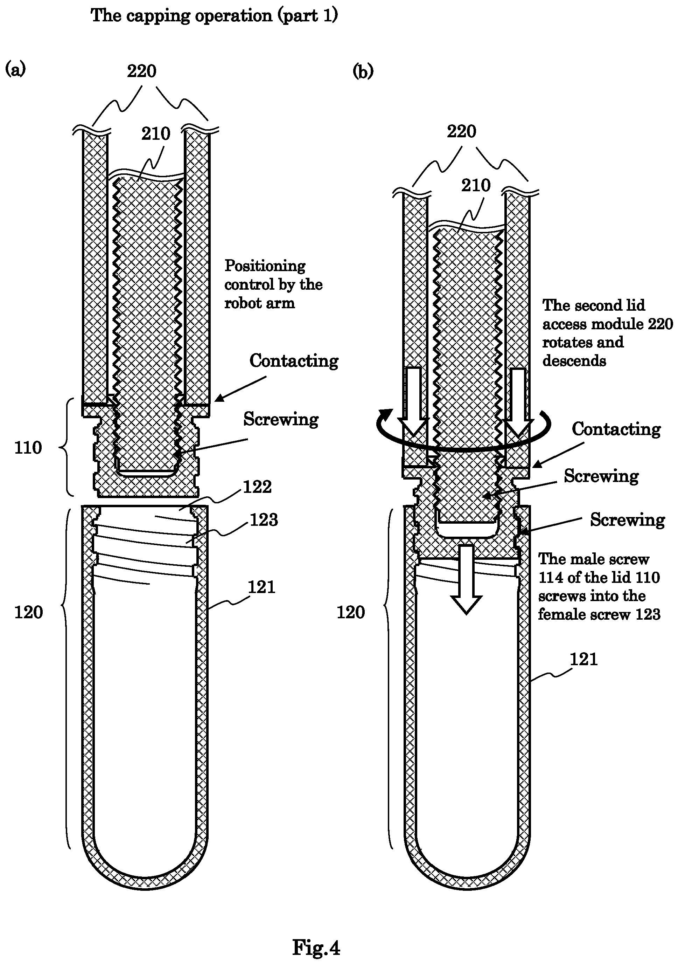

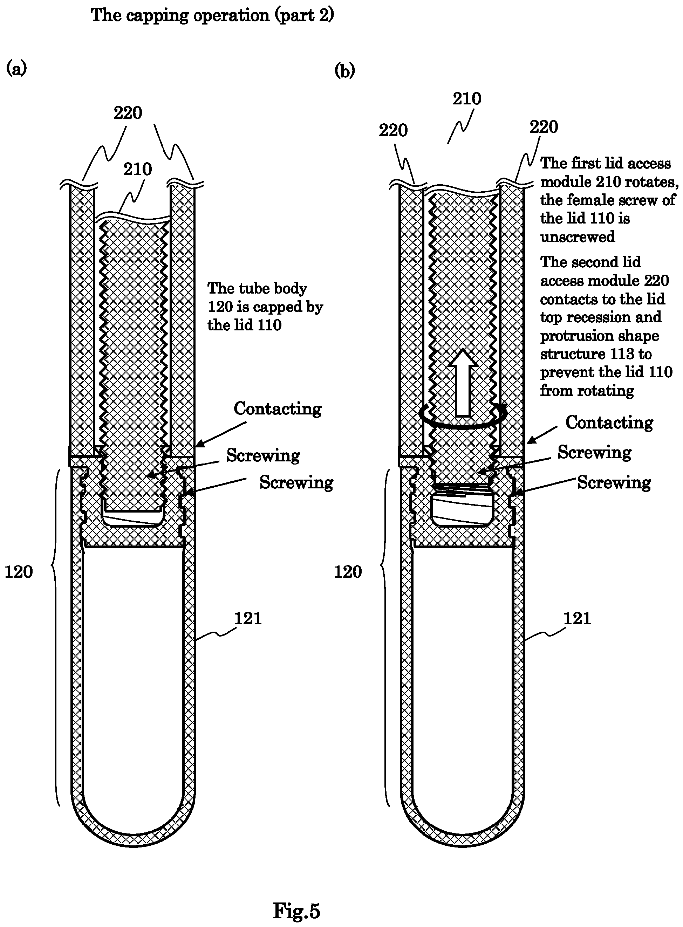

Next, as shown in Fig.4 (b), the lid 110 contacts the upper opening of the tube body 120 by the positioning control of the robot arm. The second lid access module 220 of the lid access module 200 rotates, and the rotation torque from the second lid access module 220 is transmitted to the lid 110 via the connection between the lid top recession and protrusion shape structure 113 and the second lid access module 220 as shown in Fig.5 (a). If the lid 110 rotates as shown above, the male screw 114 is screwed into the female screw 123 of the tube body 120, and the lid 110 is capped to the tube body 120. When finishing screwing the lid 110 to the tube body 120, the rotation of the second lid access module 220 stops.

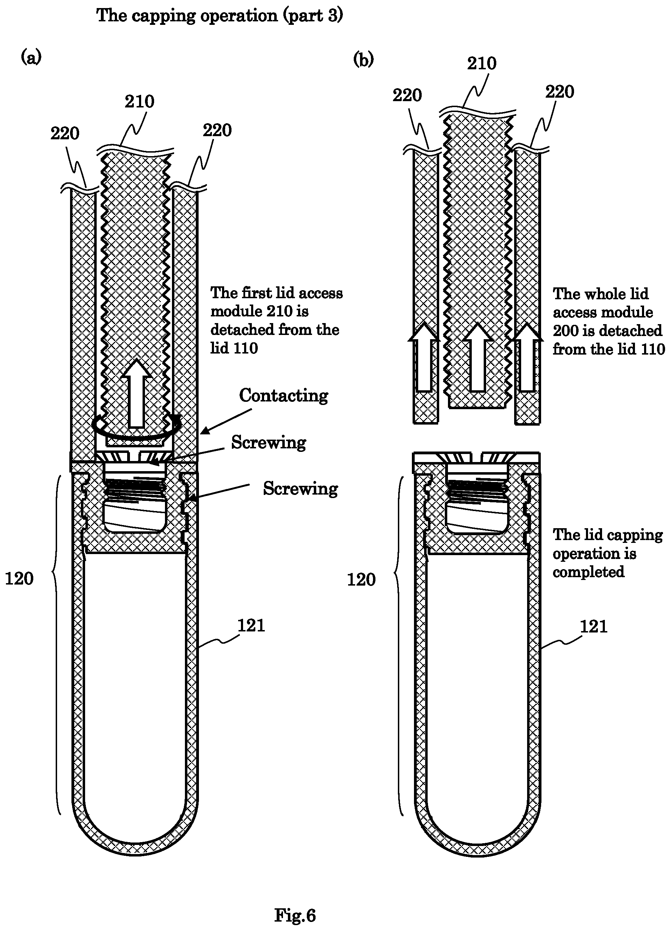

Next, as shown in Fig.5 (b), the first lid access module 210 starts rotating for unscrewed direction against the lid dent inner screw 112. The first lid access module 210 keeps on rotating, and the first lid access module 210 leaves the lid dent inner screw 112 as shown in Fig.6 (a).

Lastly, the lid access module 200 detaches from the lid 110 as shown in Fig.6 (b). The lid 110 caps the tube body 120 in this stage, then the capping operation for the lid 110 is finished.

The above-mentioned flows are the automatic operation for the lid capping operation.

### [The carrying operation for the sample storage tube]

Next, the carrying operation for the sample storage tube 100 is described below.

When the carrying operation starts after the lid capping operation subsequently, the carrying operation starts from the Fig.5 (b) state. Hereinafter, the carrying operation starts from the state in which the sample storage tube 100 has already been capped by the lid 110 and inserted to the rack in the predetermined position.

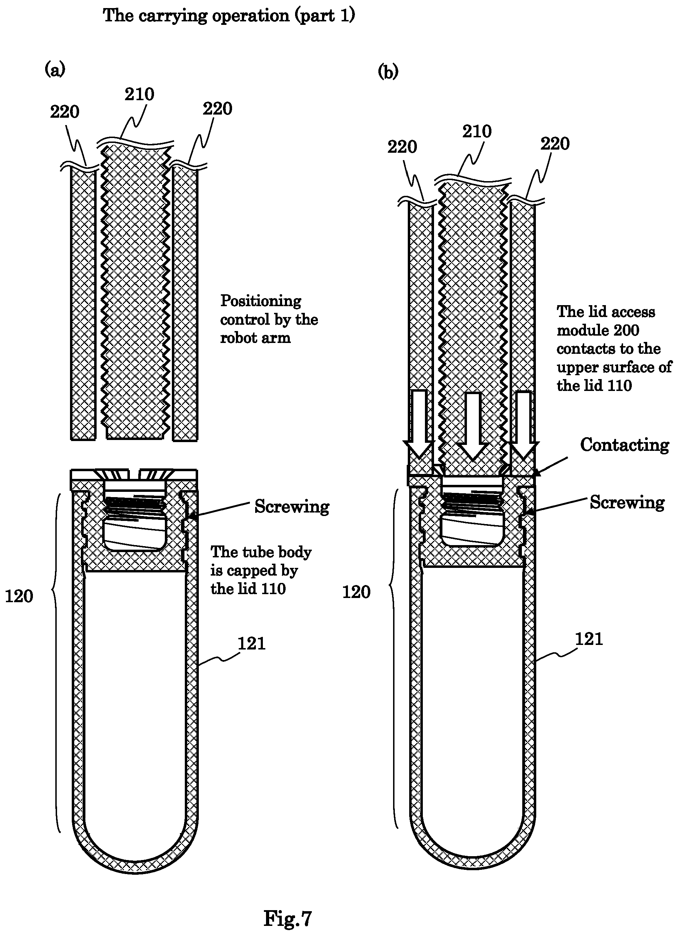

As shown in Fig.7 (a), the lid access module 200 is positioned above the target sample storage tube 100 precisely by the positioning control of the robot arm.

Next, as shown in Fig.7 (b), the lid access module 200 descends to the upper surface of the sample storage tube 100 and contacts it. The first lid access module 210 facing the lid dent inner screw 112 and the second lid access module 220 contacts and connects to the lid top recession and protrusion shape structure 113.

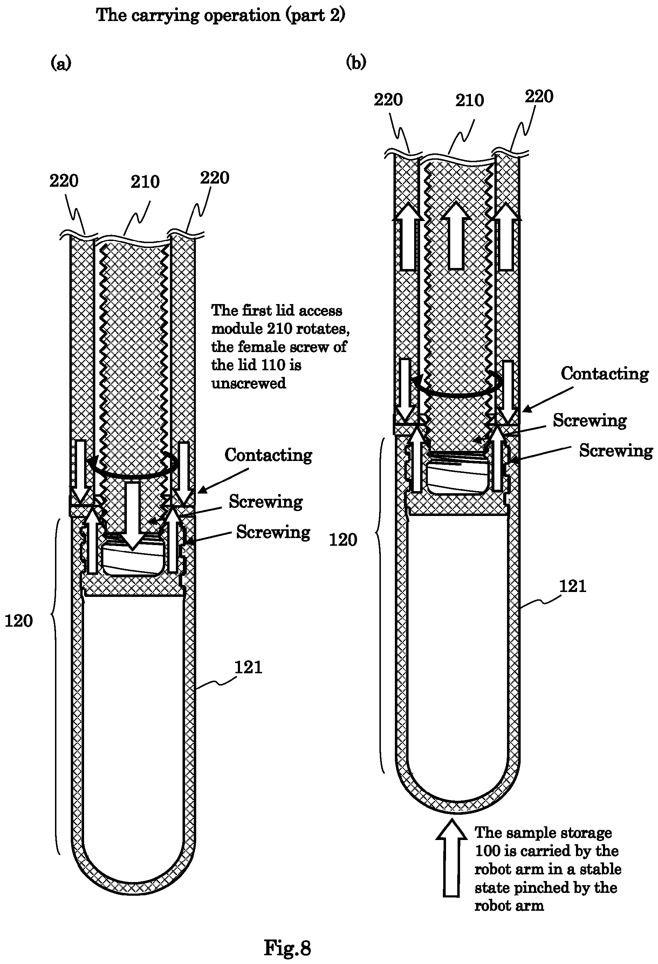

Next, as shown in Fig.8 (a), the second lid access module 220 connecting to the lid top recession and protrusion shape structure 113 is kept on stopping, while the first lid access module 210 rotates and screws into the lid dent inner screw 112. When the first lid access module 210 is screwed into the lid dent inner screw 112, the sample storage tube 100 and the lid access module 200 reach the same state shown in Fig.5 (a).

As shown in Fig.8 (a), the second lid access module 220 contacts with the lid top recession and protrusion shape structure 113 and is kept stopped, while the first lid access module 210 rotates and screws into the dent inner screw 112. The first lid access module 210 does not change its position. Therefore, the pulling-up force is applied to the lid 110 as the first lid access module 210 screws up the lid dent inner screw 112. At the same time, the second lid access module 220 does not change its position. Therefore, the pushing-down force is applied to the lid 110 as the second lid access module 220 contacts with the lid top recession and protrusion shape structure 113. The lid is pinched by those pulling-up force and the pushing-down force, and the lid is held firmly by the lid access module 200 of the robot arm.

Next, as shown from the state shown in Fig.8 (a) to Fig.8 (b), the sample storage tube 100, with the lid 110 and the tube body 120 together, can be carried in a stable state according to the robot arm motion.

The above-mentioned steps are the automatic operation for the carrying operation.

### [The lid decapping operation]

Next, the lid decapping operation is described below.

The decapping operation for decapping the lid 110 from the tube body 210 starts after the carrying operation subsequently, the decapping operation starts from the Fig.8 (b) state. Hereinafter, the decapping operation starts from the state whose the sample storage tube 100 has already been capped by the lid 110 and inserted to the rack in the predetermined position.

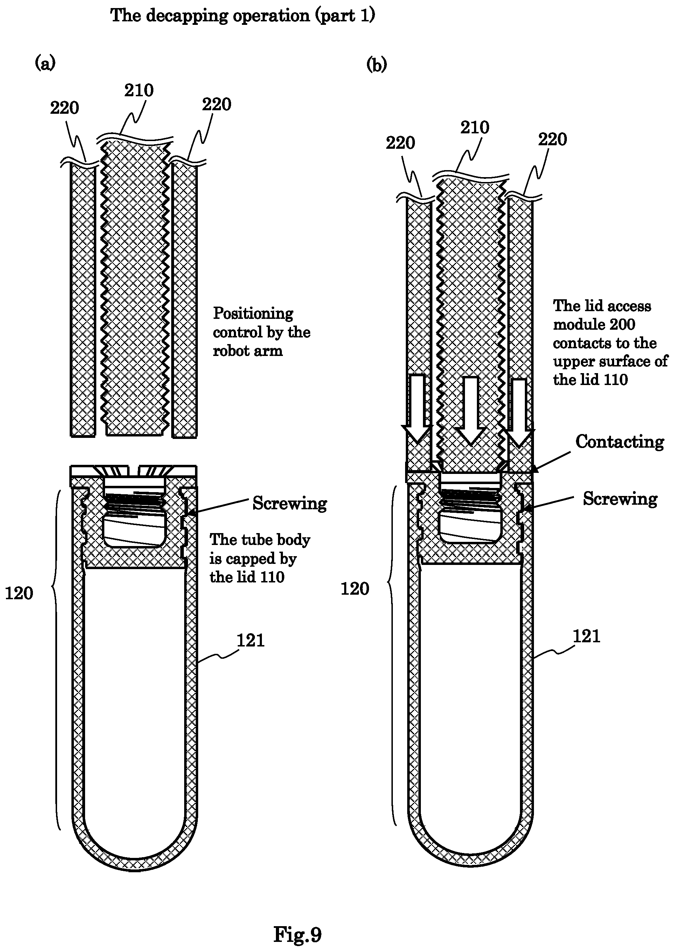

As shown in Fig.9 (a), the lid access module 200 is positioned above the target sample storage tube 100 precisely by the positioning control of the robot arm.

Next, as shown in Fig.9 (b), the lid access module 200 descends to the upper surface of the sample storage tube 100 and contacts to it. The first lid access module 210 facing to the lid dent inner screw 112 and the second lid access module 220 contacts and connects to the lid top recession and protrusion shape structure 113.

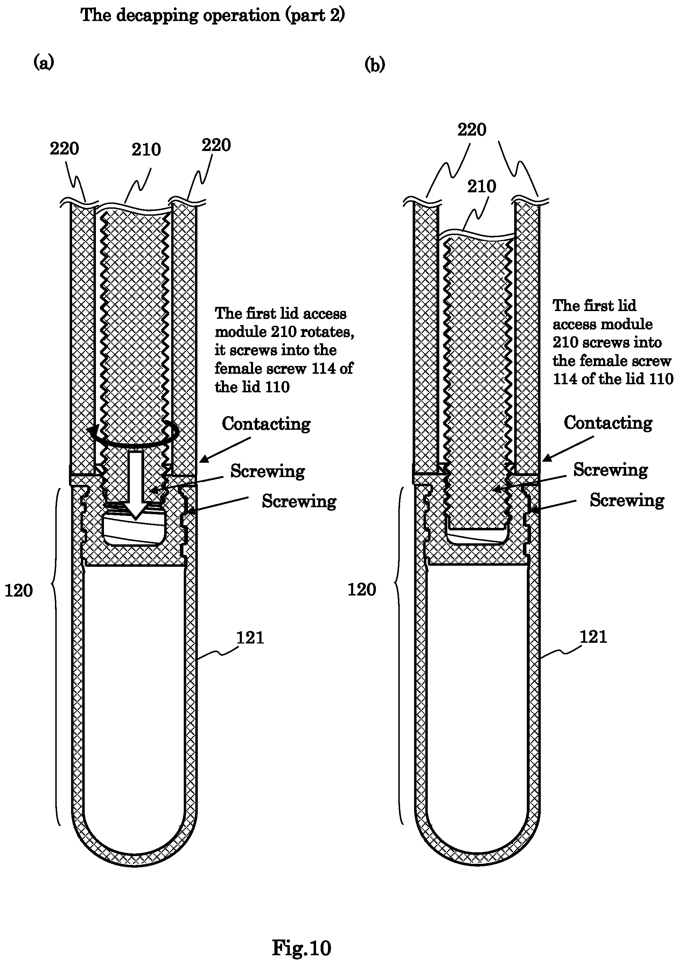

Next, as shown in Fig.10 (a), the second lid access module 220 connecting to the lid top recession and protrusion shape structure 113 is kept stopped, while the first lid access module 210 rotates and screws into the lid dent inner screw 112. When the first lid access module 210 is screwed into the lid dent inner screw 112, the sample storage tube 100 and the lid access module 200 reach the same state shown in Fig.8 (b).

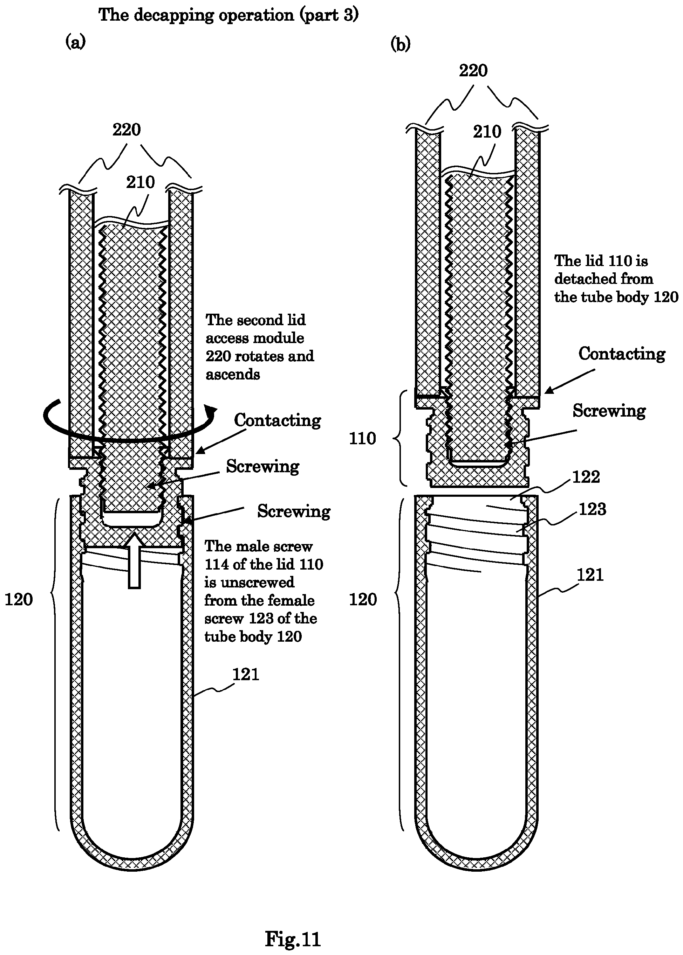

As shown in Fig.11 (a), the first lid access module 210 is kept stopped, while the second lid access module 220 rotates in the unscrewing direction for unscrewing the lid 110 and the tube body 120. The first lid access module 210 can rotate in the same direction as the second lid access module 220 rotates.

Then, as shown in Fig.11 (b), the rotation torque is transmitted to the lid 110 by the lid access module 200 via the connection between the lid top recession and protrusion shape structure 113 and the second lid access module 220. As the lid 110 rotates while the tube body stays stopped in the rack, the male screw 114 of the lid 110 and the female screw 123 of the tube body 120 unscrew from each other, and the lid 110 is detached from the tube body 120.

As shown in Fig.11 (b), the lid 110 is detached from the tube body 120 while the first lid access module 210 is remains connected to the lid dent inner screw 112, the lid 110 is held firmly by the lid access module 200 of the robot arm. This is the same state as Fig.5 (a) and Fig.8 (a).

The sample storage tube 100, which the lid 110 and the tube body 120 are jointed together, can be carried in a stable state according to the robot arm motion.

The above-mentioned flows are the automatic operation for the lid decapping operation.

### Embodiment 2

The second sample storage tube 100a in embodiment 2 according to the present invention is described. In the second sample storage tube 100a shown in this embodiment 2, the lid 110a is an outer screw type lid.

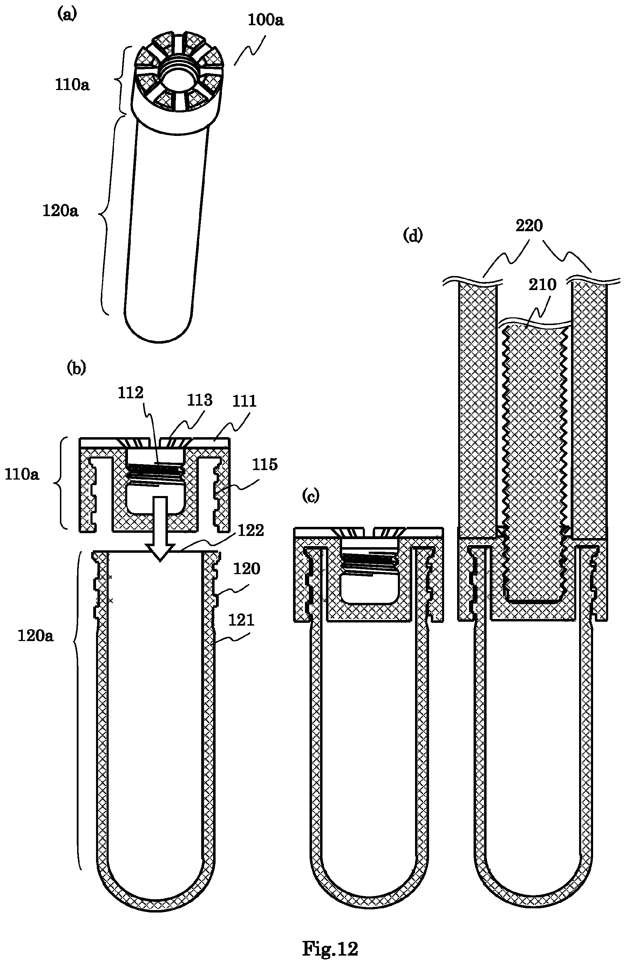

Fig.12 is a schematic view of the structure of the sample storage tube 100 in which the lid 110a is an outer screw type lid.

Fig.12 (a) is a perspective view showing the sample storage tube 100a capping with the lid 110a.

Fig.12 (b) is a vertical cross-sectional view showing the sample storage tube which the lid 110a is decapped state.

Fig.12 (c) is a vertical cross-sectional view showing the sample storage tube which the lid 110a is capped state.

Fig.12 (d) is a schematic view showing the operation for contacting the lid access module 200 to the upper surface of the lid 110a.

As shown in Fig.12 (b), the tube body 120a comprises a male screw 124 that is provided at the outer side surface near the upper opening as an outer screw, while the lid 110a comprises a female screw 115 that corresponds to the male screw 114 of the tube body 120.

Regarding the operation, as with embodiment 1, the first lid access module 210 can access the lid dent inner screw 112 and the second lid access module 220 can access the lid top recession and protrusion shape structure 113 as shown in Fig.12 (d).

### Embodiment 3

Embodiment 3 shows the example of the carrying of the identification code written in the side surface or bottom of the tube body 120 by printing or sticking according to the present invention as described below.

When using a plurality of sample storage tube 100 at the same time, each sample storage tube should be recognized independently because each sample storage tube acts as independent storage. In order to recognize each sample storage, each sample storage carries the identification code information such as a barcode or two-dimensional code supporting the management information are provided on the side surface area and bottom surface of the sample storage tube 100. In order to manage each sample storage tube independently, the identification code information should be read and managed by the management system.

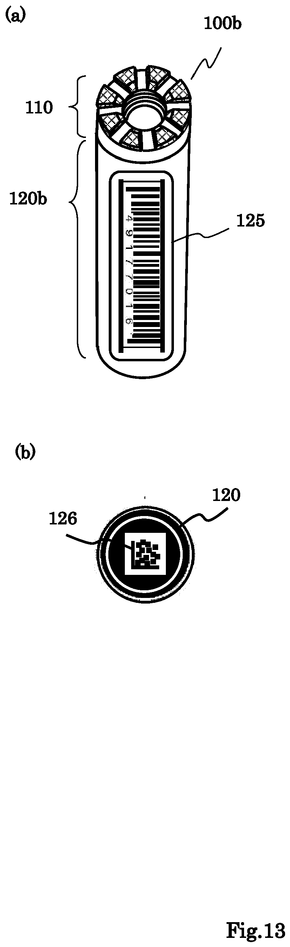

Fig.13 (a) is a schematic view of the example which carries the writable film around the tube body 120. The writable film can turn its color by laser marking as the identification code writable area 125. By installing this identification code writable area 125, the identification code can be written by turning its color by laser marking. As shown in Fig.13 (b), the identification code writable area 126 can be installed to the bottom of the lid 110.

In this example, barcode is written in the identification code writable area 125 on the side wall of the tube body 120b, two-dimensional code is written in the identification code writable area 126 on the bottom surface of the tube body 120b.

While some preferable embodiments of the sample storage according to the present invention are described above, it should be understood that various changes are possible, without deviating from the technical scope according to the present invention. Therefore, the technical scope according to the present invention is limited only by the claims attached.

### Industrial applicability

A sample storage tube according to the present invention can be employed as sample storage tube such as micro tube used extensively for storing a large number of samples.

### Description of the reference numerals

- 100: Sample storage tube
- 110: Lid
- 111: Lid body
- 112: Lid dent inner screw
- 113: Lid top recession and protrusion shape structure
- 114: Male screw
- 115: female screw
- 120: tube body
- 121: Body
- 122: Opening
- 123: Male screw
- 124: Female screw
- 125: Identification code writable area
- 126: Identification code writable area
- 200: lid access module
- 210: First lid access module
- 220: Second lid access module

## Claims

1. A sample storage tube comprising;
a tube body for storing sample;
a lid for closing the opening of the tube body by screwing to the tube body;
a lid structure in the top surface of the lid, comprising
a lid dent inner screw provided in a dent at the center of the lid top surface, wherein the lid dent inner screw can be accessed by a first lid access module that accesses as an external member; and
a lid top recession and protrusion shape structure provided on the top edge of the lid, wherein the lid top recession and protrusion shape structure can be accessed by a second lid access module that accesses as an external member.

2. A sample storage tube according to claim 1, in which the lid top recession and protrusion shape structure is a gear shape structure provided on the top edge of the lid, and the gear shape structure can accept and fit to a corresponding gear shape provided on the second lid access module.

3. A sample storage tube according to claim 1, in which the lid top recession and protrusion shape structure is a single or a plurality of small dents or holes, and the dents or holes can accept and fit to a corresponding projection or pin provided on the second lid access module.

4. A sample storage tube according to any one of claims 1 to 3, wherein the tube body comprises an inner screw provided on the inner side wall surface near the opening; the lid comprises an outer screw provided on the outer side wall surface corresponding to the inner screw of the tube body, wherein the lid can screw into the tube body as the lid, and the opening of the tube body can be closed.

5. A sample storage tube according to any one of claims 1 to 3, wherein the tube body comprises an outer screw provided on the outer side wall surface near the opening; the lid comprises an inner screw provided on the inner side wall surface corresponding to the outer screw of the tube body, wherein the lid can screw into the tube body as the lid, and the opening of the tube body can be closed.

6. A sample storage tube according to any one of claims 1 to 5, wherein identification code information is carried onto either or both of the side outer surface or the bottom surface of the tube body by printing or adhesion.

7. A sample storage tube according to any one of claims 1 to 6, wherein the tube body comprises a rotation preventing object provided on the side wall surface or the bottom surface the tube body, wherein the rotation preventing object contacts the structure of the rack to prevent the tube body from rotating, wherein the rotation of the tube body is prevented if rotation torque is applied to the tube body.

8. A sample storage tube according to any one of claims 1 to 7,
wherein a screwing control and an opening control of the lid to the tube body by the rotation torque to the lid are operated by the second lid access module via the lid top recession and protrusion shape structure;
wherein a closing control of the lid to the tube body by the rotation torque to the lid is operated by the first lid access module via the lid dent inner screw;
wherein a carrying control of the sample storage tube is operated by the combination of the first lid access module and the second lid access module by applying both a pull-up force applied by the first lid access module via the lid dent inner screw and a pull-down force applied by the second lid access module contacting the lid top recession and protrusion shape structure at the same time to pinch the sample storage tube in a stable state.

9. An automation system for operating a sample storage tube, which sample storage tube comprises a tube body for storing a sample and a lid for enclosing an opening of the tube body by screwing to the tube body, comprising;
a robot arm comprising a first lid access module and a second lid access module for accessing the lid and operating the sample storage tube;
wherein the lid comprises a lid dent inner screw provided in a dent at the center of the lid top surface, and the lid dent inner screw can be accessed by the first lid access module; and a lid top recession and protrusion shape structure installed on the top edge of the lid, and the lid top recession and protrusion shape structure can be accessed by the second lid access module,
wherein the second lid access module can operate a screwing control and an opening control of the lid to the tube body by applying rotation torque to the lid via the lid top recession and protrusion shape structure;
wherein the first lid access module can operate an enclosing control of the lid to the tube body by the rotation torque to the lid via the lid dent inner screw;
wherein the combination of the first lid access module and the second lid access module can operate a carrying control of the sample storage tube in a pinched stable state by applying both a pull-up force applied by the first lid access module via the lid dent inner screw and a pull-down force applied by the second lid access module contacting the lid top recession and protrusion shape structure at the same time.

10. An automation system for operating a sample storage tube according to claim 9, wherein the first lid access module accessing the lid dent inner screw is located in a center and the second lid access module accessing the lid top recession and protrusion shape structure is located in an outer portion around the first lid access module, wherein the first lid access module is a male screw bolt structure, and the second lid access module is a cylinder shape structure around the first lid access module.

11. An automation system for operating a sample storage tube according to claim 9 or 10, wherein the first lid access module accessing the lid dent inner screw is located in a center and the second lid access module accessing the lid top recession and protrusion shape structure is located in an outer portion around the first lid access module, the first lid access module and the second lid access module can rotate independently each other and can slide up and down independently.

12. An automation system for operating a sample storage tube according to any one of claims 9 to 11, wherein
the first lid access module is a male screw bolt structure, and
the second lid access module is a cylinder shape structure around the first lid access module, wherein the recession and protrusion shape structure corresponding to the lid top recession and protrusion shape structure is provided on the top edge of the cylinder shape structure.
